# EUROPÄISCHE PATENTSCHRIFT

(11) **EP 3 491 270 B1**
(45) Veröffentlichungstag und Bekanntmachung des Hinweises auf die Patenterteilung: **02.09.2020**
(21) Anmeldenummer: 17751604.4
(22) Anmeldetag: 25.07.2017
(51) Int. Cl.: F16G 15/06

(54) **SCHWERLASTSCHÄKEL**
HEAVY-DUTY SHACKLE
MANILLE POUR CHARGE LOURDE

(30) Priorität: 27.07.2016 DE 102016113897
(43) Veröffentlichungstag der Anmeldung: 05.06.2019
(73) Patentinhaber: Schmiedestück-Vertrieb Feuerstein GmbH, 45525 Hattingen (DE); Van Beest International B.V., 3360 AB Sliedrecht (NL)
(72) Erfinder: MÜLLER, Stefan, 44137 Dortmund (DE)
(74) Vertreter: Tarvenkorn, Oliver
(86) Internationale Anmeldenummer: PCT/DE2017/100618
(87) Internationale Veröffentlichungsnummer: WO 2018/019333

(56) Entgegenhaltungen:
- WO-A1-2007/137344
- DE-A1- 2 749 445
- FR-A- 1 556 406
- US-A- 5 597 260
- US-A1- 2011 265 442
- US-A1- 2015 121 836

## Beschreibung

Die Erfindung betrifft einen Schwerlastschäkel mit den Merkmalen des Oberbegriffs des Anspruchs 1.

Schwerlastschäkel werden für das Heben schwerer Lasten oder zur Anbindung von Ankerketten, insbesondere bei Offshore-Installationen, verwendet. Aufgrund der großen Abmaße und der hohen Masse von mehreren hundert Kilogramm, wovon allein auf den Schäkelbolzen ein Drittel des Gewichts entfallen, kann das Einsetzen des Bolzens nur mit zusätzlichen Hilfsmitteln wie einem Kran erfolgen. Situationsbedingt kann es erforderlich sein, den Bolzen von der einen oder anderen Seite her in den bereits positionierten Schäkelkörper einzuführen. Möglicherweise ist auch der Gewindeabschnitt des Bolzens, an dem eine Sicherungsmutter anzubringen ist, nur von einer Seite zugänglich, sodass der Schäkel zunächst um 180° gedreht werden muss, um die passende Einschubrichtung des Bolzens zu ermöglichen. Dies ist aufgrund der Größe und des Gewichts des Schwerlastschäkels und des Bolzens schwierig, zumindest zeitraubend. Um eine Verdrehsicherung des Bolzenkopfes herzustellen und diesen beim Anziehen der Mutter nicht auch noch durch ein zweites Werkzeug kontern zu müssen, ist es bekannt, den Kopf des Bolzens nicht rund auszubilden.

Somit kann neben der Umfangskante des Kopfes mindestens ein Anschlagelement an der Außenseite des Schäkelkörpers angebracht oder beim Gießen direkt am Schäkelkörpers mit angeformt werden. Sobald der Bolzen in den Schäkelkörper eingesetzt ist, wird er sich spätestens beim Aufdrehen der Sicherungsmutter um die eigene Achse drehen, sodass der unrunde Abschnitt der Kopfumfangskante an eine Anlagekante der Verdrehsicherung anschlägt und eine weitere Rotation des Bolzens verhindert wird. Die durch außen am Schäkelkörper überstehende Anschlagelemente gebildete Verdrehsicherung verhindert jedoch das Aufsetzen der Sicherungsmutter an dieser Seite, denn die Sicherungsmutter wird entweder durch die Anschlagelemente in ihrer Rotation behindert oder sie wird sich nur punktuell an den Endabschnitten anlegen und verkanten. Eine wirksame Sicherung des Bolzens ist somit nicht möglich. Ein Schwerlastschäkel gemäß dem Oberbegriff des Anspruchs 1 ist aus der Offenlegungsschrift WO2007/137344A1 bekannt.

Die Aufgabe der vorliegenden Erfindung besteht darin, einen Schäkel der eingangs genannten Art so zu verbessern, dass der Bolzen von beiden Seiten her in den Schäkelkörper einsetzbar ist und dass unabhängig von der Einsetzrichtung sowohl eine wirksame Verdrehsicherung für den Kopf gebildet wird wie auch die Sicherungsmutter problemlos aufgeschraubt werden kann.

Diese Aufgabe wird durch einen Schwerlastschäkel mit den Merkmalen des Anspruchs 1 gelöst.

Erfindungswesentlich ist, dass eine Mutteranlagefläche vorgesehen ist, die gegenüber der Verdrehsicherung für den Bolzenkopf erhöht liegt.

Die Mutteranlagefläche kann dabei eine endlose Kreisringfläche sein, welche die Durchgangsöffnungen und die Verdrehsicherung umgibt.

Sie kann aber auch unterbrochen sein und in mindestens drei in gleicher Winkelteilung zueinander ausgerichtete Teile aufgeteilt sein.

Sofern die Mutteranlagefläche an einer Erhebung ausgebildet ist, welche auf den äußeren Oberflächen der Endabschnitte ausgebildet ist, kann die Aufnahme für den Bolzenkopf direkt auf der äußeren Oberfläche der Endabschnitte liegen.

Möglich ist aber auch, in der Oberfläche eine Senkung vorzusehen, die als Aufnahme für die Kopfumfangskante dient, wobei die Mutteranlagefläche unmittelbar durch die äußere Oberfläche des Endabschnitts gebildet ist.

Die Erfindung wird nachfolgend anhand eines Ausführungsbeispiels und mit Bezug auf die Zeichnungen näher erläutert. Die Figuren zeigen im Einzelnen:
- Fig. 1: einen Schwerlastschäkel in Ansicht von vorn;
- Fig. 2: den Schäkelkörper im Schnitt;
- Fig. 3: einen Endbereich des Schäkelkörpers in seitlicher Ansicht;
- Fig. 4: den Bolzen in Ansicht von vorn.
- Fig. 5: einen unteren Teil des Schwerlastschäkels in perspektivischer Ansicht von links;
- Fig. 6: den unteren Teil des Schwerlastschäkels in seitlicher Ansicht von rechts;

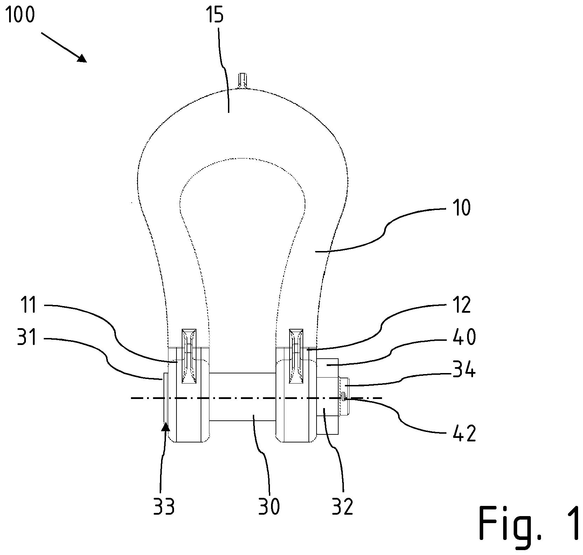

In Figur 1 ist ein Schwerlastschäkel 100 in Ansicht von vorn dargestellt. Dieser umfasst im Wesentlichen einen Schäkelkörper 10 und einen darin eingesetzten Bolzen 30. Über eine Sicherungsmutter 40 wird der im Schäkelkörper 10 eingesetzte Bolzen 30 gesichert.

Der Schäkelkörper 10 besitzt bei diesem Ausführungsbeispiel eine Omega- oder hufeisenförmige Struktur, die im Wesentlichen durch einem Bogenabschnitt 15 bestimmt wird, welcher beidseitig in einem Endabschnitt 11, 12 ausläuft. Die Struktur des Schäkelkörpers 10 außerhalb der Endabschnitte 11, 12 ist jedoch für die vorliegende Erfindung ohne Bedeutung.

Die Endabschnitte 11,12 besitzen jeweils hier nicht sichtbare, fluchtende Durchgangsöffnungen, durch die der Bolzen 30 gesteckt ist. Der Bolzen 30 besitzt an seinem in Figur 1 linken Ende einen Kopf 31, wobei der Kopf 31 in der Darstellung in Figur 1 fast vollständig versenkt angeordnet ist und nur ein schmaler Teil einer Kopfumfangskannte 33 noch herausschaut. Am anderen Ende ist ein Gewinde 32 am Bolzen 30 ausgebildet, auf das die Sicherungsmutter 40 aufgeschraubt wird. Jenseits des Gewindeabschnitts 32 ist ein weiterer Absatz 34 ausgebildet, der eine Querbohrung aufweist, in die ein Splint 42 oder ein anderes Sicherungsmittel für die Sicherungsmutter 40 eingesetzt werden kann.

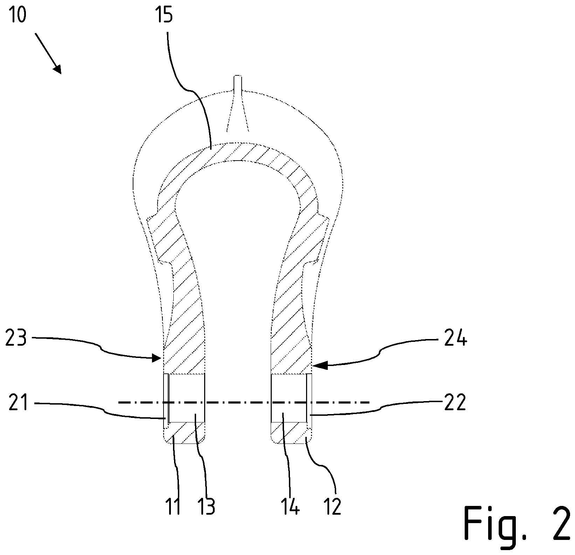

In Figur 2 ist nur der Schäkelkörper 10 dargestellt, also ohne den Bolzen 30. Dieser ist im dargestellten Ausführungsbeispiel als sogenannter Seilschlingenschäkel, auch *Wide Body Shackle* genannt, ausgebildet. Dazu besitzt der Schäkelkörper 10 eine ausgeprägte Hufeisen- oder Omega-förmige Struktur im Bogen 15. Außerdem sind die inneren Flanken im Bogen 15 stark gerundet, um für eine Seilschlaufe, in welche der Schwerlastschäkel 100 eingehängt wird, einen möglichst großen Radius und eine dementsprechend breite Auflagefläche zu bilden.

Die Endabschnitte 11,12 besitzen Durchgangsbohrungen 13,14, die jeweils an ihren nach außen weisenden Seiten eine als Bolzenkopfaufnahme ausgebildete Vertiefung 21, 22 aufweisen. Die Vertiefungen 21, 22 sind von ebenen Auflageflächen 23, 24 umgeben. Es gibt im Bereich der Auflageflächen 23, 24 keine über die äußeren Oberflächen der Endabschnitte 11, 12 hinaus überstehenden Elemente. Insbesondere behindert die in Form der Vertiefungen 21, 22 ausgebildete Verdrehsicherung die plane Auflage der Sicherungsmutter auf den Auflageflächen 23, 24 nicht.

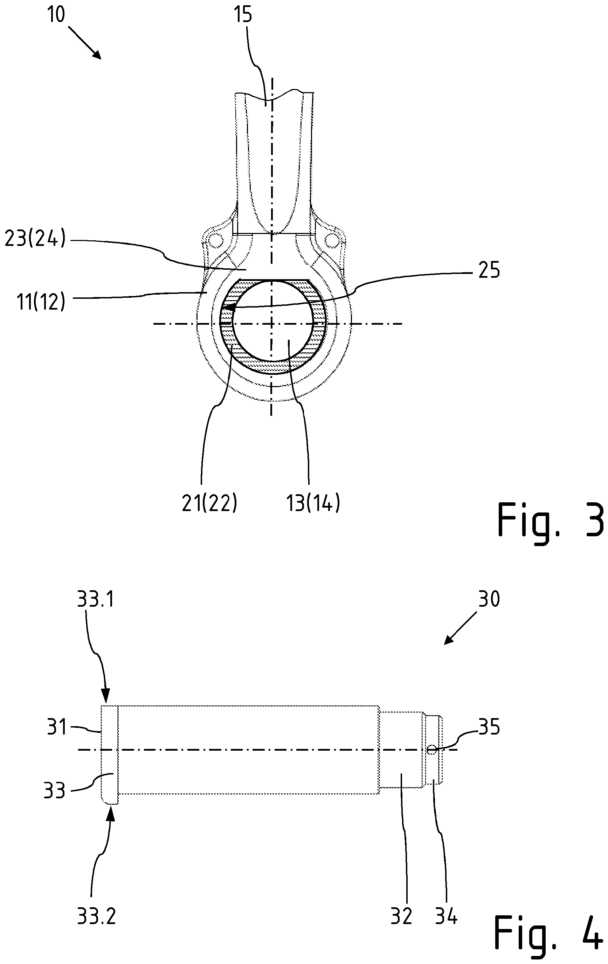

Figur 3 zeigt eine Draufsicht auf einen der Endbereiche 11 oder 12. Die als Aufnahme für den Kopf und zur Herstellung einer Verdrehsicherung dienenden, nicht-runde Vertiefung 21 bzw. 22 ist schraffiert dargestellt; sie umgibt die Öffnung 13 bzw. 14. Außerhalb der Vertiefung 21 bzw. 22 ist die ebene Auflagefläche 23, 24 für die Sicherungsmutter ausgebildet, die gegenüber dem Rest der Endabschnitte 11, 12 etwas erhaben ist.

Figur 4 zeigt in den Bolzen 30 mit seinen Endabschnitten 32, 34 und der Querbohrung 35 am rechten Ende sowie dem Kopf 31 am linken Ende. Eine Kopfumfangskante 33 besitzt oben einen Sekantenabschnitt 33.1 und unten einen Kreisbogenabschnitt 33.2.

Wie aus der seitlichen Ansicht auf den Bolzen 30 in Figur 4 ersichtlich, geht die Umfangslinie an der Oberseite direkt in den Sekantenabschnitt 33.1 am Kopf 31 über, d.h. oben gibt es keinen Überstand des Kopfes 31 über den Körper des Bolzens 310 hinaus.

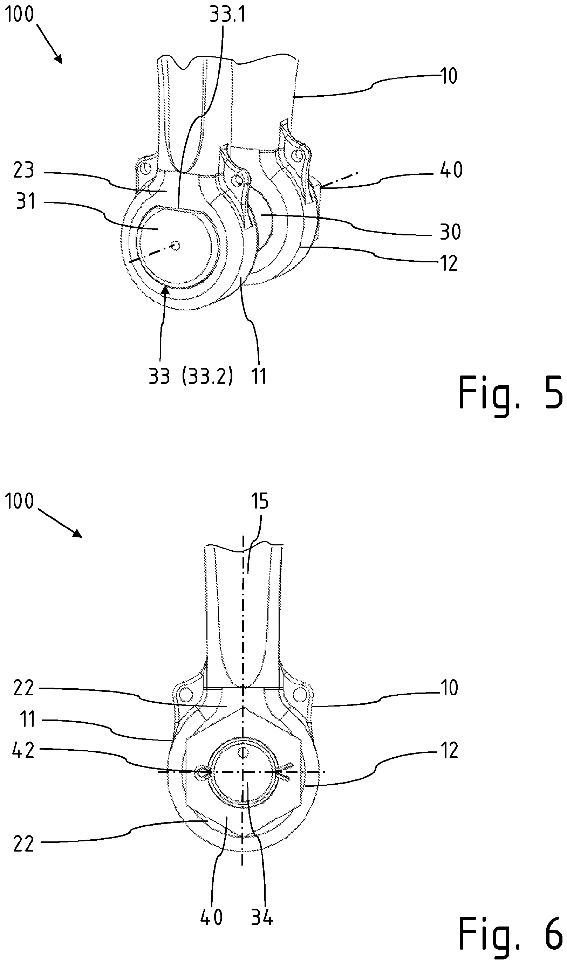

In Figur 5 ist ein Teil des Schäkels 100 mit Bolzen 30 in einer perspektivischen Ansicht auf die linke untere Hälfte dargestellt. Erfindungswesentlich ist, dass sowohl der linke Endabschnitt 11 wie der rechte Endabschnitt 12 gleichartig ausgebildet sind, um das wahlweise Einsetzen des Bolzens 30 von der einen oder der anderen Seite her zu ermöglichen und um ebenso die unproblematische Sicherung des eingesetzten Bolzens beidseitig zu ermöglichen. Die gleichartige Ausbildung bezieht sich vor allem auf die Vertiefungen, die die Aufnahmen für den Bolzenkopf 31 bilden und die Anlageflächen 23, welche die Vertiefungen zur Aufnahme des Bolzenkopfes 31 umgeben.

Die Anlagefläche 23 ist in sich eben und senkrecht zur Mittelachse des Bolzens 30 ausgerichtet. Der Kopf 31 des Bolzens 30 ist, wie bereits erwähnt, nicht kreisrund ausgebildet, um eine formschlüssige Verdrehsicherung zu ermöglichen. Bei der dargestellten, bevorzugten Ausführungsform, besitzt er vielmehr den Sekantenabschnitt 33.1, der einen Kreisbogenabschnitt 33.2 unterbricht. Beide Abschnitte 33.1, 33.2 bilden die Kopfumfangskante 33.

Figur 6 zeigt eine seitliche Ansicht des Schäkels 100 von rechts mit Blick auf den Endabsatz 34 des Bolzens 30. Die Sicherungsmutter 40 ist aufgesetzt und liegt auf der Anlagefläche 22 des rechten Endabschnitts 12 auf. Ein Splint 42 sichert sie.

## Patentansprüche

1. Schwerlastschäkel (100), wenigstens umfassend:
- einen Schäkelkörper (10) mit zwei gegenüberliegenden Endabschnitten (11, 12) mit je einer Durchgangsöffnung (13, 14) zur Aufnahme eines Bolzens (30) und mit einem zentralen Bogen (15), der sich zwischen den Endabschnitten (11, 12) erstreckt;
- einen in den miteinander fluchtenden Durchgangsöffnungen (13, 14) einsetzbaren Bolzen (30), der einen Kopf (31) an einem Ende aufweist, dessen Kopfumfangskante (33) nicht kreisrund ist
- wenigstens eine an der Außenseite wenigstens eines Endabschnitts (11, 12) angeordnete Verdrehsicherung (21, 22), an dem die Kopfumfangskante (33) formschlüssig festzulegen ist, wobei die Durchgangsöffnungen (13, 14) jeweils unmittelbar von wenigstens einer vertieften Kopfaufnahme (21, 22) umgeben sind, die vertieft innerhalb einer Mutteranlagefläche (23, 24) ausgebildet ist und in der die nicht-runde Kopfumfangskante (33) in der Kopfaufnahme (21, 22) formschlüssig festzulegen ist, **dadurch gekennzeichnet, dass** der Bolzen (30) an seinem anderen Ende einen Gewindeabschnitt (32) für eine Sicherungsmutter (40) aufweist .

2. Schwerlastschäkel (100) nach Anspruch 1, **dadurch gekennzeichnet, dass** die Kopfumfangskante (33) einen geraden Sekantenabschnitt (33.1) und einen die Enden des Sekantenabschnitts (33.1) verbindenden Kreisbogenabschnitt (33.2) besitzt.

3. Schwerlastschäkel (100) nach Anspruch 1 oder 2, **dadurch gekennzeichnet, dass** die Außenkontur der Kopfumfangskante (33) und die Innenkontur (25, 26) der beiden Vertiefungen (21, 22) gleich und um eine Spaltbreite versetzt zueinander sind.

4. Schwerlastschäkel (100) nach einem der Ansprüche 1 bis 3, **dadurch gekennzeichnet, dass** die Kopfaufnahme (21, 22) in die äußere Oberfläche des jeweiligen Endabschnitts (11, 12) eingesenkt ist und um die Vertiefung (21, 22) herum eine glatte Mutteranlagefläche (23, 24) ausgebildet ist, die Teil der äußeren Oberfläche des jeweiligen Endabschnitts (11, 12) ist.

5. Schwerlastschäkel (100) nach einem der Ansprüche 1 bis 3, **dadurch gekennzeichnet, dass** die Mutteranlagefläche (23, 24) auf einem Steg oder Buckel ausgebildet ist, der gegenüber der äußeren Oberfläche des jeweiligen Endabschnitts (11, 12) erhaben ausgebildet ist.

6. Schwerlastschäkel (100) nach einem der Ansprüche 1 bis 5, **dadurch gekennzeichnet, dass** mehrere voneinander getrennte Mutteranlageflächen (23, 24) ausgebildet sind, die gegenüber der äußeren Oberfläche des jeweiligen Endabschnitts (11, 12) erhaben ausgebildet sind.

## Claims

1. Heavy-duty shackle (100) at least comprising:
- a shackle body (10) having two opposite end portions (11, 12) each with a through-opening (13, 14) for receiving a bolt (30) and having a central arc (15) that extends between the end portions (11, 12);
- a bolt (30) that is insertable into the mutually aligned through-openings (13, 14) and has a head (31) at one end, the head circumferential edge (33) of which is not circular;
- at least one rotation lock (21, 22) which is arranged on the outer side of at least one end portion (11, 12) and to which the head circumferential edge (33) is intended to be fixed in a form-fitting manner,
wherein the through-openings (13, 14) are each surrounded directly by at least one recessed head receptacle (21, 22) which is formed in a recessed manner within a nut abutment surface (23, 24) and in which the non-round head circumferential edge (33) is intended to be fixed in the head receptacle (21, 22) in a form-fitting manner, **characterized in that** the bolt (30) has at its other end a threaded portion (32) for a securing nut (40).

2. Heavy-duty shackle (100) according to Claim 1, **characterized in that** the head circumferential edge (33) has a straight secant portion (33.1) and a circular-arc portion (33.2) connecting the ends of the secant portion (33.1).

3. Heavy-duty shackle (100) according to Claim 1 or 2, **characterized in that** the outer contour of the head circumferential edge (33) and the inner contour (25, 26) of the two depressions (21, 22) are identical and offset with respect to one another by a gap width.

4. Heavy-duty shackle (100) according to one of Claims 1 to 3, **characterized in that** the head receptacle (21, 22) is recessed into the outer surface of the respective end portion (11, 12) and a smooth nut abutment surface (23, 24) is formed around the depression (21, 22), said smooth nut abutment surface (23, 24) being part of the outer surface of the respective end portion (11, 12).

5. Heavy-duty shackle (100) according to one of Claims 1 to 3, **characterized in that** the nut abutment surface (23, 24) is formed on a rib or hump that is formed in a raised manner with respect to the outer surface of the respective end portion (11, 12).

6. Heavy-duty shackle (100) according to one of Claims 1 to 5, **characterized in that** a plurality of mutually separated nut abutment surfaces (23, 24) are formed, which are each formed in a raised manner with respect to the outer surface of the respective end portion (11, 12).

## Revendications

1. Manille pour charge lourde (100), comportant au moins :
- un corps de manille (10) comprenant deux portions d'extrémité (11, 12) opposées possédant chacune une ouverture de passage (13, 14) destinée à accueillir un goujon (30) et comprenant un goujon central (15) qui s'étend entre les portions d'extrémité (11, 12) ;
- un goujon (30) pouvant être inséré dans les ouvertures de passage (13, 14) alignées entre elles, lequel possède une tête (31) à une extrémité, dont le bord périphérique de tête (33) n'est pas circulaire ;
- au moins un élément de blocage antirotation (21, 22) disposé au niveau du côté extérieur d'au moins une portion d'extrémité (11, 12), auquel le bord périphérique de tête (33) est à fixer par complémentarité de formes,
les ouvertures de passage (13, 14) étant respectivement entourées directement par au moins un logement de tête (21, 22) plus profond, lequel est formé plus profond à l'intérieur d'une surface d'appui d'écrou (23, 24) et dans lequel le bord périphérique de tête (33) non rond est à fixer par complémentarité de formes dans le logement de tête (21, 22),
**caractérisée en ce que** le goujon (30) possède à son autre extrémité une portion filetée (32) pour un écrou de blocage (40).

2. Manille pour charge lourde (100) selon la revendication 1, **caractérisée en ce que** le bord périphérique de tête (33) possède une portion de sécante (33.1) droite et une portion en arc de cercle (33.2) qui relie les extrémités de la portion de sécante (33.1).

3. Manille pour charge lourde (100) selon la revendication 1 ou 2, **caractérisée en ce que** le contour externe du bord périphérique de tête (33) et le contour interne (25, 26) des deux cavités (21, 22) sont identiques et décalés mutuellement d'une largeur d'interstice.

4. Manille pour charge lourde (100) selon l'une des revendications 1 à 3, **caractérisée en ce que** le logement de tête (21, 22) est encastré dans la surface extérieure de la portion d'extrémité (11, 12) respective et une surface d'appui d'écrou (23, 24) lisse, qui fait partie de la surface extérieure de la portion d'extrémité (11, 12) respective, est formée autour de la cavité (21, 22).

5. Manille pour charge lourde (100) selon l'une des revendications 1 à 3, **caractérisée en ce que** la surface d'appui d'écrou (23, 24) est formée sur une nervure ou un bossage qui est formé en relief par rapport à la surface extérieure de la portion d'extrémité (11, 12) respective.

6. Manille pour charge lourde (100) selon l'une des revendications 1 à 5, **caractérisée en ce que** plusieurs surfaces d'appui d'écrou (23, 24) séparées les unes des autres sont formées, lesquelles sont formées en relief par rapport à la surface extérieure de la portion d'extrémité (11, 12) respective.
